Europäisches Patentamt

European Patent Office

Office européen des brevets

(19)

(11) Publication number: **0 027 814**
**B1**

(12) EUROPEAN PATENT SPECIFICATION

(45) Date of publication of patent specification: **18.04.84**    (51) Int. Cl.³: **H 02 G 3/04**

(21) Application number: **80900838.6**

(22) Date of filing: **29.04.80**

(86) International application number:
**PCT/SE80/00126**

(87) International publication number:
**WO 80/02476 13.11.80 Gazette 80/26**

(54) BAND-SHAPED DEVICE FOR FORMING A PIPE-SHAPED PROTECTION COVER.

(30) Priority: **03.05.79 SE 7903842**

(43) Date of publication of application:
**06.05.81 Bulletin 81/18**

(45) Publication of the grant of the patent:
**18.04.84 Bulletin 84/16**

(84) Designated Contracting States:
**CH DE FR GB LI NL**

(56) References cited:
**DE - A - 2 011 205**
**US - A - 2 378 272**

(73) Proprietor: **TELEFONAKTIEBOLAGET L M ERICSSON**
**S-126 25 Stockholm (SE)**

(72) Inventor: **HOLGERSSON, Stig Lennart**
**Smedgatan 44**
**?-330 10 Bredaryd (SE)**

(74) Representative: *Johnsson, Helge et al,*
**Telefonaktiebolaget L M Ericsson**
**S-126 25 Stockholm (SE)**

Courier Press, Leamington Spa, England.

Band-shaped device for forming a pipe-shaped protection cover

Field of the Invention

The present invention relates to a band-shaped device for forming a pipe-shaped protection cover for telephone and electrical cables etc.

Description of Prior Art

Previously known devices for forming a cover for electrical cables and the like have for different reasons not given rise to any need on the industrial market for which reason they are difficult to obtain if not completely impossible to have at hand. One of the main reasons is that the known constructions are difficult to manufacture and thus involve high production costs resulting in a high selling price. Furthermore, many known constructions intervene in existing installations which in turn implies high installation costs and frequently demands that the installation is carried out by a professional. These factors also give rise to a high expense level for the known products. The German published patent application 2011205 describes a plastic skirting which may be used for hiding electric cables. It is extruded in a flat band provided with a groove and a thin part extending along the extruded band and this band may be folded to give a normal skirting profile which is snapped together by a snap lock mechanism. The US—A—2378272 shows that a square sectioned pipe shaped form can be produced from a stiff planar structure having a plurality of V-grooves in one surface thereof.

Summary of the Invention

Although the wall thickness of the device according to DE—A 2011205 is comparatively thick all over except for a part used for forming a radius on the upper part of the skirting it is not very rigid when mounted. It must be well secured to the wall on the back side and the front side must be provided with ribs to keep the skirting straight. These ribs, however, make it harder to coil the band.

The present invention relates to a band forming a protective cover which is easy to coil when flat and where the cover when folded is very stiff and keeps its shape. The band may be easily manufactured by means of extruding a suitable soft plastic material in a simple tool. A band-shaped device for forming a pipe-shaped protection cover for telephone cables, electric cables etc has a first substantially planar major surface and a second major surface provided with a plurality of V-grooves parallel with the longitudinal direction of the band, the longitudinal side edges of which are provided with snap action locking elements for closing the cover when the band is longitudinally folded along said grooves and the characteristics of the invention are shown in the appended claims. The device according to the invention may have comparatively thin walls and only the parts located around the V-grooves are thickened enabling stiff corners. This will save material at the same time as the folded pipe is sufficiently stiff even if the material is soft enough to enable winding on small diameter coils.

Brief Description of the Drawings

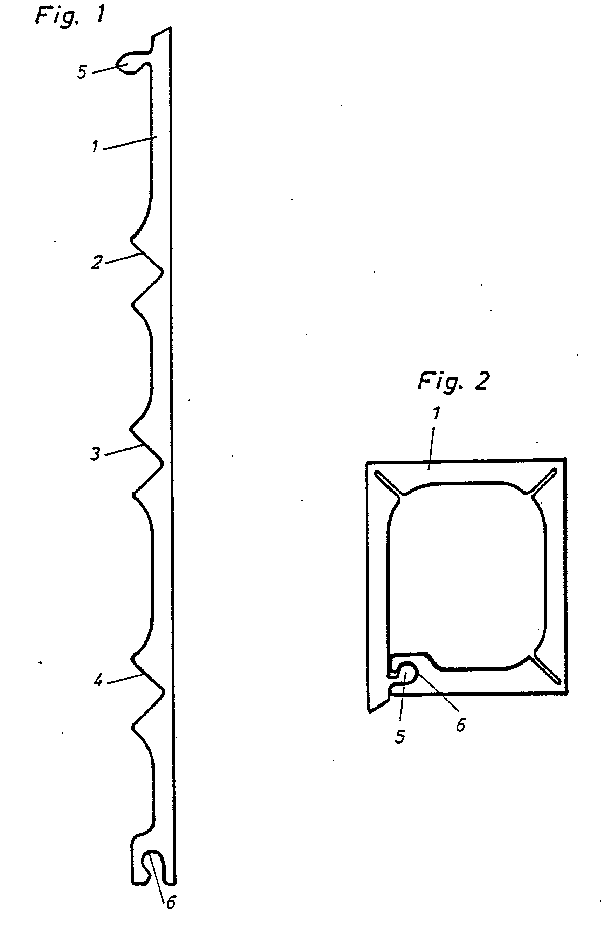

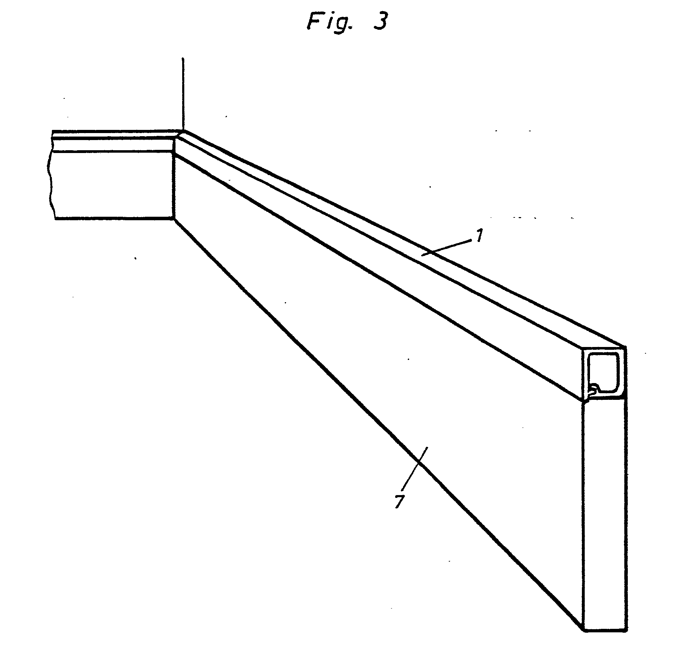

Fig. 1 shows in a large scale a side view of one embodiment of a device according to the present invention. Fig. 2 shows a side view of the device shown in Fig. 1 after forming a cover by means of the same. Fig. 3 shows a schematic perspective view of an installation with a device according to Figs. 1 and 2.

The device shown in the drawings according to the present invention is manufactured as a band 1 (Fig. 1), whose one major surface is substantially planar and whose other major surface is profiled and has three V-grooves 2, 3, 4 and a male-shaped snap-lock element 5 at one of the longitudinal side edges and a female-shaped snap-lock element 6 at the other longitudinal side edge. Each of the V-grooves 2, 3 and 4 penetrates nearly to said one major surface of the band 1 and since the band is made of a soft plastic material the material part at the apex of a groove can be considered to form a thin hinge mounting. The V-grooves are formed in longitudinal ridges provided on the said other surface so that the sides of the V-grooves 2, 3 and 4 extend above the general level of the mentioned other surface of the band 1 and form elevations on each side of the V-grooves 2, 3 and 4. In the present embodiment of the invention, the angle between the sides in the V-grooves 2, 3 and 4 is approximately 90°.

The male-shaped snap-lock element 5 has a conventional design and is located adjacent the slightly bevelled longitudinal side edge of the band 1, while the female-shaped snap-lock element 6 is arranged in the other longitudinal side edges of the band 1.

It will furthermore be pointed out that V-grooves 2, 3 and 4 extend in parallel with the longitudinal side edges of the band 1.

In order to form a pipe-shaped protection cover with the device as described above according to the present invention, the band 1 is folded for closing the V-grooves 2, 3 and 4 as will be described more in detail in Fig. 2 and the male-shaped snap-lock element 5 is snapped into the female-shaped snap-lock element 6. As it appears from Fig. 2, the sides in the angular grooves 2, 3 and 4 will fit with each other resulting in that the ridges on each side of the V-grooves 2, 3 and 4 will have a stiffening effect on the pipe-shaped protection cover shown in Figs. 2 and 3.

In Fig. 3 a cover formed from the device of the present invention is shown applied on a skirting 7. As it appears from Fig. 2, a pipe-shaped protection cover having a square section is formed and as it appears from Fig. 3, one of the side surfaces is placed on the upper side of the skirting 7 and can be fastened to the skirting 7 by means of some suitable fastening means, for example glue, staples, nails or the like. In the cover fastened on the skirting 7 electrical cables, telephone cables or the like can be placed and by slitting the cover 1 by means of a knife, an outlet for an electrical cable can be placed anywhere along the skirting.

Such a cover can be opened at any time after its closing and it is very easy to make changes in the placing of electrical cables and telephone cables without the changes causing any ugly marks in the installation.

As it appears from Fig. 2, the longitudinal side edge of the band extending from the male-shaped snap-lock element 5 will form a grip. The grip facilitates opening and closing the cover according to the present invention.

Furthermore, it will be pointed out that the location shown in Fig. 3 is not necessary but any one of the planar outer side surfaces of the cover can be placed against the skirting 7.

The band 1 according to the present invention is extremely simple to manufacture of a suitable plastic material by extrusion in a very simple tool. The plastic material can be chosen so that the ready-made band 1 will be soft and can be reeled and sold in coils resulting in that the packages will be extremely simple and cheap. The design of the V-grooves 2, 3 and 4 makes the mounted cover according to Figs. 2 and 3 extremely stiff and keeps its shape in spite of the fact that it is made of a soft plastic material. It is an extremely great advantage to be able to reel the band according to the present invention and to sell it in coils of a determined length or in coils intended to be in arbitrary lengths.

## Claims

1. A band shaped device for forming a pipe-shaped protection cover for telephone cables, electrical cables etc, said band (1) having a first substantially planar major surface and a second major surface having a V-groove (2) penetrating nearly to said first major surface and substantially parallel to the longitudinal direction of the band (1) the longitudinal edges of which are provided with snap action locking means (5, 6) for closing the cover when the band (1) is longitudinally folded along said V-grooves characterized in that further V-grooves (3, 4) are provided, the further grooves (3, 4) also penetrating nearly to said first major surface, and all the grooves (2, 3, 4) being formed in longitudinal ridges provided on said second major surface, whereby the sides of the grooves (2, 3, 4) extend above the general level of said second major surface.

2. A device according to claim 1, characterized in that the opening angle of the V-grooves (2, 3, 4) is chosen in such a way that the sides are substantially in mutual contact when the locking members (5, 6) engage each other.

3. A device according to claim 1, characterized in that the locking means are male-shaped (5) and female-shaped (6), the female-shaped snapping element (6) being a groove extending along one of the longitudinal side edges of the band (1) and the male-shaped snapping element (5) being an abutting part extending adjacent the opposite longitudinal side edge of the band (1) for forming a gripping edge.

4. A device according to claims 1, 2 or 3, characterized in that the number of V-shaped grooves (2, 3, 4) is three and that the band when folded longitudinally until engagement between the locking means (5, 6) forms a cover with a square cross section.

5. A device according to claim 4, characterized in that the angle between the sides in the V-shaped grooves (2, 3, 4) is about 90°.

## Revendications

1. Dispositif en forme de bande pour constituer un carter de protection en forme de tuyau pour câbles téléphoniques, câbles électriques, etc., ladite bande (1) présentant une première surface principale sensiblement plane et une seconde surface principale ayant une gorge en V (2) qui pénètre jusqu'à proximité de ladite première surface principale et qui est sensiblement parallèle à la direction longitudinale de la bande (1), dont les bords longitudinaux comportent des moyens (5, 6) de verrouillage à action élastique destinés à fermer le carter lorsque la bande (1) est pliée longitudinalement suivant ladite gorge en V, caractérisé en ce que d'autres gorges en V (3, 4) sont prévues, les autres gorges (3, 4) pénétrant également jusqu'à proximité de ladite première surface principale, et toutes les gorges (2, 3, 4) étant formées dans des nervures longitudinales situées sur ladite seconde surface principale, de manière que les côtés des gorges (2, 3, 4) dépassent au-dessus du niveau général de ladite seconde surface principale.

2. Dispositif selon la revendication 1, caractérisé en ce que l'angle d'ouverture des gorges en V (2, 3, 4) est choisi de manière que les côtés soient sensiblement en contact mutuel lorsque les éléments de verrouillage (5, 6) sont enclenchés entre eux.

3. Dispositif selon la revendication 1, caractérisé en ce que les moyens de verrouillage sont de forme mâle (5) et de forme femelle (6), l'élément (6) d'emboîtement élastique de forme femelle étant une gorge qui s'étend le long de l'une bords latéraux longitudinaux de la bande (1) et l'élément (5) d'emboîtement élastique de forme mâle étant une partie d'emboîtement s'étendant à proximité immédiate du bord latéral longitudinal opposé de la bande (1) pour former un bord de prise.

4. Dispositif selon les revendications 1, 2 ou 3, caractérisé en ce que le nombre de gorges (2, 3, 4) en forme de V est de trois et en ce que la band, lorsqu'elle est pliée longitudinalement jusqu'à enclenchement entre les moyens de verrouillage (5, 6), forme un carter de section carrée.

5. Dispositif selon la revendication 4, caractérisé en ce que l'angle formé entre les côtés des gorges (2, 3, 4) de forme en V est d'environ 90°.

**Patentansprüche**

1. Bandförmige Vorrichtung zum Ausbilden einer rohrförmigen Schutzabdeckung für Telefonkabel, elektrische Kabel etc., welches Band (1) eine erste, im wesentlichen ebene Hauptfläche und eine zweite Hauptfläche mit einer V-Nut (2) hat, die nahezu zur ersten Hauptfläche und im wesentlichen parallel zur Längsrichtung des Bandes (1) vordringt, dessen Längsränder mit einschnappenden Verriegelungsmitteln (5, 6) zum Schließen der Abdeckung vorgesehen sind, wenn das Band (1) entlang der V-nut längsgefaltet ist, dadurch gekennzeichnet, daß weitere V-Nuten (3, 4) vorgesehen sind, die ebenfalls in die Nähe der ersten Hauptfläche vordringen, und daß alle Nuten (2, 3, 4) in Längsrippen ausgebildet sind, die auf der genannten zweiten Hauptfläche ausgebildet sind, wodurch die Seiten der Nuten (2, 3, 4) oberhalb des allgemeinen Niveaus der genannten zweiten Hauptfläche verlaufen.

2. Vorrichtung nach Anspruch 1, dadurch gekennzeichnet, daß der Öffnungswinkel der V-nut (2, 3, 4) auf solche Weise gewählt wird, daß die Seiten im wesentlichen in gegenseitiger Berührung stehen, wenn die Verriegelungsglieder (5, 6) miteinander in Eingriff stehen.

3. Vorrichtung nach Anspruch 1, dadurch gekennzeichnet, daß die Verriegelungsmittel als männlicher Bestandteil (5) und als weiblicher Bestandteil (6) ausgebildet sind, daß das weiblich ausgebildete Schnappelement (6) eine Nut ist, die entlang einer der Längsseitenränder des Bandes (1) verläuft, und daß das männlich ausgebildete Schnappelement (5) ein Anstoßteil ist, welches neben dem gegenüberliegenden Längsseitenrand des Bandes (1) verläuft, um einen Greifrand zu bilden.

4. Vorrichtung nach den Ansprüchen 1, 2 oder 3, dadurch gekennzeichnet, daß die Anzahl der V-Nuten (2, 3, 4) drei ist, un daß das Band wenn es bis zum Eingriff zwischen den Verriegelungsmitteln (5, 6) längsgefaltet ist, eine Abdeckung mit einem quadratischen Querschnitt bildet.

5. Vorrichtung nach Anspruch 4, dadurch gekennzeichnet, daß der Winkel zwischen den Seiten der V-förmigen Nuten (2, 3, 4) ungefähr 90° beträgt.

Fig. 1

5

1

2

3

4

6

Fig. 2

1

5

6

*Fig.* 3

2